# EUROPEAN PATENT SPECIFICATION

(11) **EP 0 393 495 B1**
(45) Date of publication and mention of the grant of the patent: **19.01.1994**
(21) Application number: 90106973.2
(22) Date of filing: 11.04.1990
(51) Int. Cl.: H02G 15/18, H01R 4/70, H01B 17/60

(54) **Covering for cable joints, elements of a device for realizing cable joints and cable joint comprising said covering**
Abdeckung für Kabelverbindungen, Elemente einer Vorrichtung zum Herstellen von Kabelverbindungen und Kabelverbindung mit besagter Abdeckung
Couverture pour joints de câbles, éléments d'un dispositif pour réaliser des joints de câbles et joints de câbles avec ladite couverture

(30) Priority: 20.04.1989 IT 2021689
(43) Date of publication of application: 24.10.1990
(73) Proprietor: PIRELLI CAVI S.p.A., 20123 Milano (IT)
(72) Inventor: Vallauri, Ubaldo, I-Monza (MI) (IT); Parmigiani, Bruno, Milan (IT); Portas, Francesco, Quattordio (AL) (IT)
(74) Representative: Giannesi, Pier Giovanni

(56) References cited:
- DE-A- 3 001 158
- US-A- 4 029 895
- US-A- 4 035 534
- US-A- 4 431 469

## Description

The present invention refers to a covering for cable joints and in particular to a covering apt to surround the mechanical and electrical connection of the conductors of two cables and to be fitted and tightened elastically on the end portions or these latter.

The invention refers also to an element of a device for realizing cable joints comprising the covering in question, and to the cable joints realized by means of said covering.

Different types of elastically expansible and collapsible coverings made up of cross-linked polymeric material compounds for realizing cable joints are known. The known coverings differ from one another for the number and type of the component tubular layers which, however, are always coaxial and superimposed one upon the other.

For instance a covering for cable joints constituted by a single tubular layer of an electrically insulating cross-linked polymeric material is known.

Another known covering for cable joints is formed by two coaxial and superimposed tubular layers of which the radially innermost one is made up of a cross-linked polymeric material having a dielectric constant ε not lower than 6 and is commonly called electric field distributor layer, while the radially outermost tubular layer is made up of an electrically insulating cross-linked polymeric material compound.

A further known covering for cable joints is formed by three coaxial and superimposed tubular layers of cross-linked polymeric material compounds; in particular the radially innermost layer is made up of a compound having a dielectric constant ε not lower than 6, the intermediate layer is made up of an electrically insulating compound and the radially outermost layer is made up of a semiconductive compound.

In all the known coverings for cables joints summarily described above, the inner cavity of any whatsoever tubular component layer (ideally separated from the others) has exactly the same diameter as the outer diameter of the tubular layer lying radially below the same independently of the fact that said layers are independent of one another or mutually linked along the surfaces of mutual contact.

Moreover all the above described known coverings are at present kept in stores in conditions of no mechanical stress applied thereto awaiting to be fitted on a device for realizing joints and/or in a joint; this because being the coverings of polymeric material, even if cross-linked, they are subject to the risk of suffering permanent deformations in case subjected to mechanical stresses of a certain entity in time.

In fact, although the known coverings, once applied on a joint are in conditions of mechanical stress applied for an indefinite period of time since they have to tighten elastically on the cable ends connected to each other in the joints, the determination of their size is carried out in such a way as to avoid that the mechanical stresses applied thereto during the whole life of a joint are of such an entity as to produce in time inadmissible permanent deformations.

Just for this reason, to effectuate joints in the wide range of the existing cables of different diameters, there is realized a plurality of coverings of different diametrical dimensions and thicknesses (one for each diameter of existing cable) and it is not possible with a known covering to effectuate joints in cables of different diametrical dimensions also of small entity.

This obliges the manufacturers and users to store a very large number of coverings for joints of different diameters to cover all the possible needs.

To apply a covering in a joint there are used known devices and examples of these latter are described in the European patent No. 149 032 of the same Applicant, German patent No. 3 011 158 and Japanese patent No. 54-49588.

The known devices comprise an element, consisting of a tubular support on which the covering is fitted in a radially elastically expanded condition and the cavity of said tubular support has the diameter of dimensions greater than the outer dimensions of the cable in which the joint is to be effected. Moreover, said known devices comprise means for removing the tubular support from the covering in order to permit this latter to contract elastically to surround the zone of mechanical and electrical connection of the conductors and to tighten elastically on the ends, facing each other, of the cable lenghts wherein the joint is effected.

The covering, to be fitted on the tubular support, is subjected to a radial elastic expansion and said radial elastic expansion produces in the covering the application of not indifferent mechanical stresses since the cavity of the tubular support has diametrical dimensions greater than the outer dimensions of the cable wherein the joint is made.

With the known coverings, it is impossible to store them fitted in elastically expanded conditions on the supports.

This because the stresses existing in said coverings, which are well higher than those existing in the same when applied on a joint (owing to the considerably greater radial expansion to which they are subject) would produce permanent deformations whose existence can make the coverings themselves unserviceable.

In fact, an essential factor for a joint is that the covering can always exert on the facing ends of the cables an elastic tightening of such an entity as to ensure an absolute absence of traces of air between the covering surfaces in mutual contact with the cable surfaces and the absolute certainty that also minimum water traces cannot penetrate or concentrate at said mutual contact surfaces.

The above involves also the need of using a specific tubular support for any diameter of existing cable in which joints are to be effected in order to reduce to the minimum the stresses to be applied to the covering. The whole turns into the need of storing, in addition to a plurality of coverings different from one another for their diametrical dimensions, also a plurality of tubular supports of different diametrical dimensions in order to realize joints in the wide range of the existing cables having different diameters and to fit a covering on the relative tubular support only when the joint is made.

To fit the coverings on the tubular supports only when the joint is made means to effectuate said fitting operation in place, with the risks that any operation carried out on site produces and involves an extension of the execution time of the joints.

From what previously given it is evident that with the known technique it is impossible firstly to have a covering able to make joints in cables having different diameters and secondly it is impossible to store said covering already applied on a tubular support that permits the realization of joints in cables having different diameters.

In order to overcome the above indicated drawbacks, the Applicant has proposed, in the Italian patent application N^{o}. 19 102 A/89 filed on 16th January 1989, a covering to coat the mechanical and electrical connection between the conductors of two cables comprising at least two coaxial and superimposed tubular sleeves of polymeric material compounds, preferably, but not necessarily coextruded and cross-linked together, of which the radially outermost sleeve is made up of a compound having a residual deformation due to an elongation imposed and applied in time smaller than that of the compound or compounds constituting the radially innermost sleeve, this latter being electrically insulating at least for a part of its thickness.

In particular in the covering forming the object of the above cited Italian patent application the cavity of the radially outermost sleeve has the diameter exactly equal to the outer diameter of the radially innermost sleeve, if ideally separated from each other.

By means of a single covering for joints having the above given characteristics it is possible to make joints in cables chosen in a wide range of diameters wherein the ratio between the maximum diameter and the minimum diameter of said range of cables reaches 1.6 and to store also for a period of time untill two years the coverings for joints already applied on a tubular support without running into any drawback.

With the solution according to said Italian patent application it is not possible to effectuate with a single covering (kept in store in radially elastically expanded conditions on the tubular support for a period of time untill two years) joints in a series of cables wherein the ratio between the maximum diameter and the minimum diameter exceeds the value of 1.6 since in the covering arise unacceptable permanent deformations.

The aim of the present invention is that of realizing a covering for joints able to allow with only one type of covering the execution of joints in cables chosen in a wider range of diameters, in particular in cables in which the ratio between the maximum diameter and the minimum diameter reaches 2 and that of storing for a period of time also untill two years said coverings applied on the relative tubular supports suitable for realizing joints in the just indicated wider range of diameters of cables and consequently of storing the elements of the devices for realizing joints for the cables in question.

The above in order that, during the removal of the tubular support from the covering, the elastic contraction of this latter on the mutually connected cable ends takes place in a shorter time than that occurring with the above disclosed solution proposed in the Italian patent application N^{o} 19 102 A/89, producing thus more reliable joints.

The aim of the present invention is constituted also by a cable joint comprising the covering in question.

The object of the present invention is a covering for cable joints comprising at least a first and a second sleeve, both sleeves being elastically expansible in radial direction, coaxial, superimposed and independent of each other and formed by cross-linked polymeric material compounds, the first sleeve radially inside the second sleeve being constituted at least for a part of its thickness by an electrically insulating cross-linked polymeric material compound, said joint being characterized by the fact that the second sleeve when separated from the first one and from the cables and in absence of any mechanical stress applied thereto has the diameter of its own cavity smaller than the outer diameter of the first sleeve when separated from the second sleeve and from the cables and in absence of any applied mechanical stress too.

A further object of the present invention is a joint for electric cables comprising an electrical and mechanical connection between the conductors of two cables and a covering for said connection comprising at least a first and a second sleeve, both sleeves being elastically expansible in radial direction, coaxial, superimposed and independent of each other and formed by cross-linked polymeric material compounds, the first sleeve radially inside the second sleeve being constituted at least for a part of its thickness by an electrically insulating cross-linked polymeric material compound said joint being characterized by the fact that the second sleeve when separated from the first sleeve and from the cables and in absence of any applied mechanical stress has the diameter of its own cavity smaller than the outer diameter of the first sleeve when separated from the second sleeve and in absence of any applied mechanical stress too and separated from the first sleeve and from the cables.

The present invention will be better understood by the following detailed description made by way of non-limiting example with reference to the figures of the attached sheets of drawing in which:
- FIGURE 1 -: is a perspective view of a covering for cable joints, according to the invention;
- FIGURES 2A-2B -: show in exploded view the separate components of the covering of figure 1;
- FIGURE 3 -: is a perspective view of an element according to the invention of a device for effectuating cable joints comprising the covering of figure 1;
- FIGURES 4, 5, 6 and 7 -: show in cross-section some embodiments of coverings according to the invention;
- FIGURE 8 -: is a longitudinal section of a further embodidiment of a covering according to the invention;
- FIGURE 9 -: is a longitudinal section of an alternative embodiment of one element according to the invention of a device for effectuating cable joints;
- FIGURE 10 -: is a longitudinal section of a cable joint according to the invention.

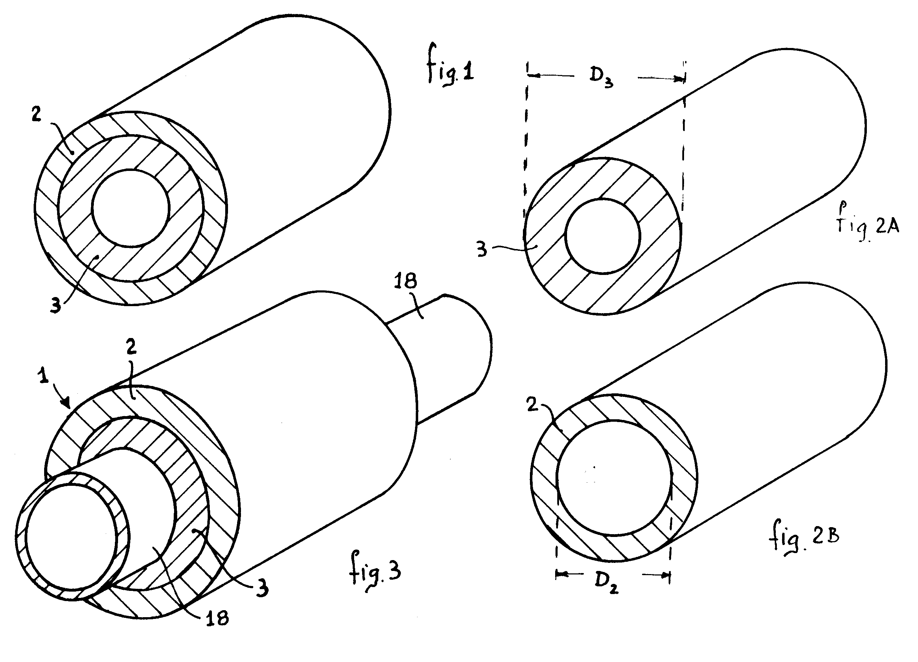

Figure 1 shows in perspective view a covering according to the invention for cable joints by which it is possible to realize joints in a series of cables wherein the ratio between the maximum diameter and the minimum diameter reaches 2, for example in a series of cables having outer diameters comprised between 20 and 40 mm.

As shown in figure 1 the covering 1 comprises a second sleeve 2 and a first coaxial sleeve 3, radially inside the second sleeve and not linked to it at the mutual contact surfaces.

An essential factor for the purposes of the present invention is that the second sleeve 2 taken per se, i.e. separately from the first sleeve 3, in absence of any applied mechanical stress and shown in figure 2B has a diameter D₂ of its own tubular cavity 4 smaller than the outer diameter D₃ of the first sleeve 3 taken per se, i.e. separately from the first tubular body, in absence of any applied mechanical stress and shown in figure 2A. Preferably the ratio between said diameters D₃ and D₂ is not smaller than 1.2. For example in the series of cables having a diameter comprised between 20 and 40 mm the ratio between diameter D₃ and D₂ is for instance 2.8.

Both the sleeves 2 and 3 are made up of cross-linked polymeric material compounds. Generally the first sleeve 3 is formed at least for a part of its own thickness by a compound of an electrically insulating cross-linked polymeric material. Always in general, the second sleeve 2 has a residual deformation smaller than 35% for an imposed elongation of 50%, determined according to standard UNI 7321-74 on a flat test piece at 100°C for a period of time of 500 hours.

In particular, even if this must not be understood as a limitation to the scope of the present invention, the second sleeve 2 is formed at least for the radially outermost part of its thickness by a polymeric material cross-linked compound having a residual deformation due to an imposed elongation applied in time smaller than that of at least one of the cross-linked compounds forming the first sleeve 3.

From the above, it results that in the covering of figure 1 the second sleeve 2 is put in radially elastically expanded conditions by the first sleeve 3 and exerts on this latter a radial pressure.

Said greater pressure exerted by the second sleeve 2 on the first sleeve 3 depends, firstly, but not exclusively, on the difference between the previously indicated diameters D₂ and D₃ when the sleeves are taken separately and both in absence of any mechanical stress, i.e. in the conditions in which they are shown in figures 2A and 2B.

Other factors contributing to the greater pressure that the second sleeve 2 fitted on the first sleeve 3 exerts on this latter are the modulus E and the thickness, measured in radial direction of the layer or layers forming the second sleeve 2.

In particular the modulus E of the cross-linked compounds constituting the second sleeve is not lower than 0.2 MPa, while the modulus E of the compound constituting the first sleeve is comprised between 0.2 and 20 MPa.

Moreover in a covering according to the invention the percentage ultimate tensile elongation of the compounds forming the second sleeve 2 is preferably not lower than 300% and the percentage ultimate tensile elongation of the compounds forming the first sleeve 3 is preferably not lower than 150%, this to avoid tearings in said sleeves during their elastic expansion.

Figures from 4 to 7 represent in section different embodiments of a covering for cable joints according to the invention.

In the embodiment shown in figure 4 the second sleeve 2′ is formed by a single tubular layer completely formed by cross-linked polymeric material compounds, to which no electric or dielectric characteristic is required, but only the mechanical characteristic of having a residual deformation smaller than 35% for an imposed elongation of 50%, determined according to the standard UNI 7321-74 on a flat test piece at 100°C for a period of time of 500 hours, a thickness and a modulus E not lower than 1 mm and 0.2 MPa, respectively, and a percentage ultimate elongation not lower than 300%.

In the just given example and in all the following examples,where not indicated otherwise, the thicknesses of the sleeves and/or of their component layers are values detected on the sleeves taken separately and in absence of applied stresses.

For instance the second sleeve 2′ has a thickness of 6 mm and is constituted by a cross-linked polymeric material compound with modulus E of 1.5 MPa and having a residual deformation of 25% for an imposed elongation of 50% applied for a period of time of 500 hours and at a temperature of 100°C.

Moreover the percentage ultimate elongation of the compound forming the second sleeve 2' is 500%.

An example of compound suitable for the second sleeve 2' is that having the following recipe:

| | |
|---|---|
| - Ethylene-propylene-diene terpolymer for example that known on the market with the name DUTRAL TER=048 (of DUTRAL S.p.A.) | 100 |
| - poly 1.2 dihydro 2.2.4 trimethylquinoline | 1.6 |
| - mercaptobenzymidazol | 2 |
| - kaolin, for example that known on the market with the name ARGIREC B.24 (of Silice & Caolin - France) | 100 |
| - trimetoxyetoxyvinylxylane | 2.5 |
| - paraffinic plasticizer | 50 |
| - stearic acid | 1 |
| - triallyl cyanurate | 1.5 |
| - carbon black, for example that known on | |
| the market with the name VULCAN P | 2.5 |
| - dicumyl peroxide | 3 |

The characteristics of the above compound, after the cross-linking, are the following ones:

| | |
|---|---|
| - ultimate tensile strength | 6 MPa |
| - percentage ultimate tensile elongation | 650 % |
| - modulus E | 1.5 MPa |
| - residual deformation due to an imposed elongation of 50%, determined according to the standard UNI 7321-74, on a flat test piece at 100°C and for a period of time of 500 hours | 25% |

The first sleeve 3' is constituted, from inside outwards, by three tubular layers 4, 5 and 6, said layers being coaxial with one another, superimposed, coextruded and cross-linked together.

The radially innermost tubular layer 4, for instance having a thickness of 3 mm, is constituted by a compound of polymeric material whose characteristic is that of having a dielectric constant ε not lower than 6 to allow said tubular layer to carry out the function of electric field distributor when applied in a joint.

One example of compound suitable for the tubular layer 4 has the following recipe given in parts by weight:

| | |
|---|---|
| - ethylene-propylene copolymer, for example that known on the market with the name DUTRAL CO-054 of Dutral S.p.A. | 100 |
| - zinc oxide | 5 |
| - carbon black, for example that known on the market with the name HUBER N 990 of DEGUSSA S.p.A. | 140 |
| - paraffinic plasticizer | 40 |
| - poly 1.2 dihydro 2.2.4 trimethylquinoline | 1.5 |
| - stearic acid | 1 |
| - triallyl cyanurate | 1 |
| - dicumylperoxide | 2 |

The characteristics of the above given compound, after the cross-linking, are as follows:

| | |
|---|---|
| - ultimate tensile strength | 7 MPa |
| - percentage ultimate tensile elongation | 560% |
| - modulus E | 1.5 MPa |
| - residual deformation due to an imposed elongation of 50% determined according to the standard UNI 7321-74 on a flat test piece at 100°C after a period of time of 500 hours | 28% |
| - dielectric constant ε determined according to standard ASTM D150 | 15 |
| - volume resistivity determined according to the standard ASTM D257 | 10¹⁰ohm x cm |

The intermediate tubular layer 5, for example having a thickness of 8 mm, is constituted by a polymeric material compound whose characteristic is that of being electrically insulating.

One example of compound suitable for the tubular layer 5 has the following recipe given in parts by weight:

| | |
|---|---|
| - ethylene-propylene copolymer, for example that known on the market with the name DUTRAL CO-054 of Dutral S.p.A. | 100 |
| - zinc oxide | 5 |
| - stearic acid | 1 |
| - lead oxide (Pb₃O₄) | 5 |
| - calcined kaolin treated superficially with trimetoxyetoxyvinylxylane | 70 |
| - trimetoxyetoxyvinylxylane | 1 |
| - triallyl cyanurate | 1.5 |
| - paraffinic plasticizer | 18 |
| - poly 1.2 dihydro 2.2.4 trimethylquinoline | 1.5 |
| - mercaptobenzo imidazol | 2 |
| - α, α' bis (ter-butylperoxy) m p diisopropylbenzene | 1.7 |

The characteristics of the above compound, after the cross-linking, are as follows:

| | |
|---|---|
| - ultimate tensile strength | 7 MPa |
| - percentage ultimate tensile elongation | 560% |
| - modulus E | 1.5 MPa |
| - residual deformation due to an imposed elongation of 50% determined according to the standard UNI 7321-74 on a flat test piece at 100°C and for a period of time of 500 hours | 28% |
| - dielectric constant ε, determined according to the standard ASTM D150 | 2.8 |
| - volume resistivity, determined according to the standard ASTM D257 | 10¹⁵ohm x cm |

The radially outermost tubular layer 6, for example having a thickness of 4 mm, of the second tubular body 3' is constituted by a compound of cross-linked polymeric material whose characteristic is that of being semi-conductive.

One example of compound suitable for the tubular layer 6 has the following recipe given in parts by weight:

| | |
|---|---|
| - ethylene-propylene-diene terpolymer, for example that known on the market with the name DUTRAL TER - 046E3 of Dutral S.p.A. | 100 |
| - conductive carbon black, for example that known on the market with the name VULCAN P of Cabot S.p.A. | 39 |
| - superconductive carbon black, for example that known on the market with the name KETIEN EC of Akzo S.p.A. | 13 |
| - zinc oxide | 5 |
| - poly 1.2 dihydro 2.2.4 trimethylquinoline | 1.5 |
| - paraffinic plasticizer | 18.6 |
| - paraffin | 4 |
| - stearic acid | 1 |
| - triallyl cyanurate | 1 |
| - dicumylperoxide | 5 |

The physical characteristics of this compound are as follows:

| | |
|---|---|
| - ultimate tensile strength | 17.8 MPa |
| - percentage ultimate tensile elongation | 230% |
| - modulus E | 5 MPa |
| - residual deformation due to an imposed elongation of 50% determined according to the standard UNI 7321-74 on a flat test piece at 100°C for a period of time of 500 hours | 13% |
| - volume resistivity determined according to the standard ASTM D257 | 100 ohm x cm |

In the particular embodiment of a covering according to the invention shown in figure 4, wherein the two sleeves have the same length, the ratio between the outer diameter of the first sleeve 3' taken per se and in absence of any applied mechanical stress and the inner diameter of the second sleeve 2' taken per se and in absence of any applied mechanical stress is for instance 2.8.

An alternative embodiment, not shown with a figure, of that represented in figure 4 differs from this latter only for the fact that the second sleeve 2' is not continuous, but discontinuous,being formed by a plurality of rings placed side by side.

Figure 5 shows in cross-section another alternative embodiment of a covering for cable joints according to the invention.

As shown in figure 5, both the first and the second sleeve are formed by two coaxial, superimposed layers, in case also coextruded and cross-linked together.

In particular tie second sleeve 2'' consists of an outer layer 7 made up of the same semiconductive compound as that forming the layer 6 of the embodiment of figure 4 and of an inner layer 8 made up of an insulating compound, for example the same as that forming the tubular layer 5 of the embodiment of figure 4.

The first sleeve 3˝ consists of an electric field distributor inner layer 8 made up of the same compound as that forming the tubular layer 4 of the embodiment of figure 4 and of an outer layer 10 made up of an electrically insulating material compound, for example that forming the tubular layer 5 of figure 4.

Moreover,in the embodiment of figure 5 the ratio between the outer diameter of the first sleeve 3˝ taken per se and in absence of any applied mechanical stress and the inner diameter of the second sleeve 2˝ taken per se and in absence of any applied mechanical stress too, is for example equals 2.

Moreover the layers 9, 10, 8 and 7 have thicknesses and characteristics corresponding, respectively, to those of the layers 4, 5, 6 and 2 of the embodiment of figure 4.

A further alternative embodiment of a covering for joints according to the invention is shown in cross-section in figure 6.

As shown in figure 6, the second sleeve 2‴ is formed by three tubular layers 11, 12 and 13, said tubular layers being coaxial with one another, superimposed and in case also coextruded and cross-linked together (which will be indicated hereinafter) and the first sleeve 3‴ (having the same length as that of the second sleeve) is formed by two tubular layers 14 and 15, coaxial, superimposed, coextruded and cross-linked together, and are described hereinafter too.

The ratio between the outer diameter of the first sleeve 3‴ taken per se and in absence of any applied mechanical stress and the inner diameter of the second sleeve 2‴ taken per se and in absence of any applied mechanical stress too, is for example of 1.8.

Of the three layers constituting the second sleeve 2‴ the radially innermost one 13 has a thickness of 5 mm and is constituted by a cross-linked polymeric material compound having electrically insulating characteristics. An example of a compound for the tubular layer 13 is that indicated for the insulating layer 5 of the embodiment of figure 4.

The intermediate tubular layer 12 has a thickness of 3 mm and is constituted by a cross-linked polymeric material compound having semiconductive properties; one example of compound for the tubular layer 12 is that indicated for the semiconductive layer 6 of the embodiment of figure 4.

The radially outermost tubular layer 11 has a thickness of 4 mm and is constituted by a cross-linked polymeric material compound to which no dielectric or electric characteristic is required, but only mechanical characteristics and one example for said compound is that indicated for the layer 2′ of the embodiment of figure 4.

In the first sleeve 3‴ , formed by two layers, the radially innermost one 14, has a thickness of 3 mm and is constituted by a cross-linked polymeric material compound having a dielectric constant ε of 15; the compound forming said layer 14 is the same as that previously indicated for the layer 4 of the embodiment of figure 4.

The radially outermost layer 15 of the first sleeve 3 has a thickness of 5 mm and is constituted by a cross-linked polymeric material compound having electric insulating characteristics and the compound forming the same is for instance that previously indicated for the layer 5 of the embodiment of figure 4.

A further alternative embodiment of a covering for cable joints according to the invention is represented in figure 7.

The alternative embodiment shown in figure 7 differs from that of figure 4 only for the fact that between the first and the second sleeve, respectively indicated with reference numerals 3′ and 2′, there is interposed at least an electrically conductive element at least partially discontinuous in radial direction and in particular a plurality of electrically conductive elements 16 circumferentially separated from one another and projecting from both the ends of the covering itself.

Examples of electrically conductive elements 16 are copper wires, strips of braided copper wires, a braiding of copper wires and the like.

A further alternative embodiment of covering according to the invention for the cable joint coverings of figures 4 and 7 is that which differs from these latter only for the fact that both the end portions of the second sleeve project from the ends of the first sleeve.

In particular the end portions of the second sleeve projecting from the first sleeve have a length not shorter than 10% of the first sleeve length.

In particular the end portions of the second sleeve projecting from the ends of the first sleeve are turned up on the second sleeve before the covering being applied in a cable joint.

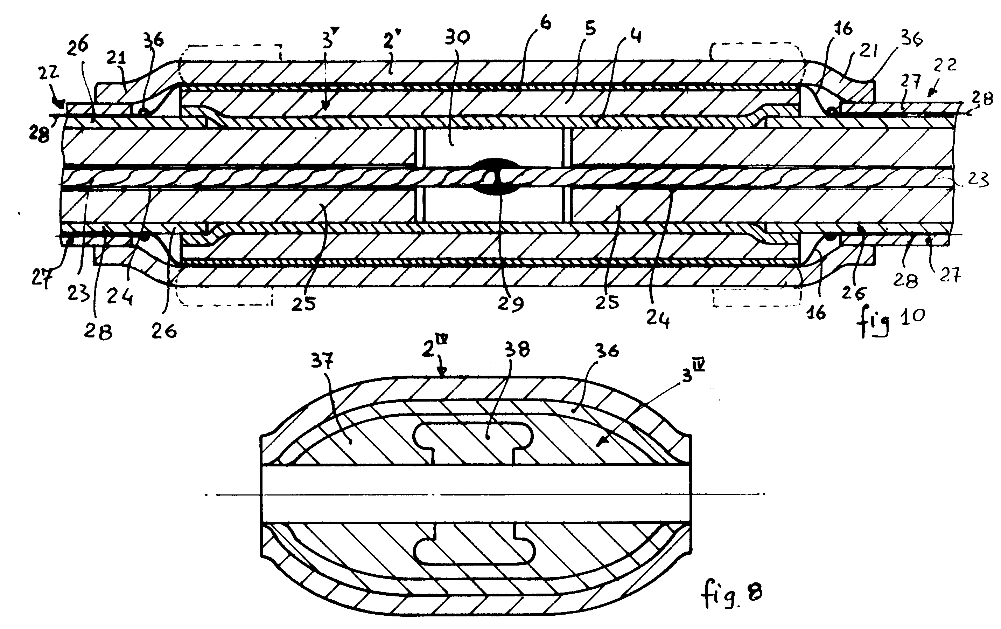

A further alternative embodiment of a covering according to the invention is represented in longitudinal section in figure 8.

As shown in said figure 8, the covering comprises a second sleeve 2^{IV} and a first sleeve 3^{IV} having tapered ends.

The second sleeve 2^{IV} is formed by a single tubular layer having the same characteristics as the tubular layer 2′ of figure 4.

The first sleeve 3^{IV} is formed by a radially outermost semiconductive layer 36, for example constituted by the same compound as that forming the layer 6 of figure 4 and by an inner layer 37 of insulating material , for example constituted by the same compound as that forming the layer 5 of figure 4.

Moreover a body 38 constituted by a semiconductive material compound, for example the same as that forming the layer 36, is set in the layer 36 and faces the cavity of the covering.

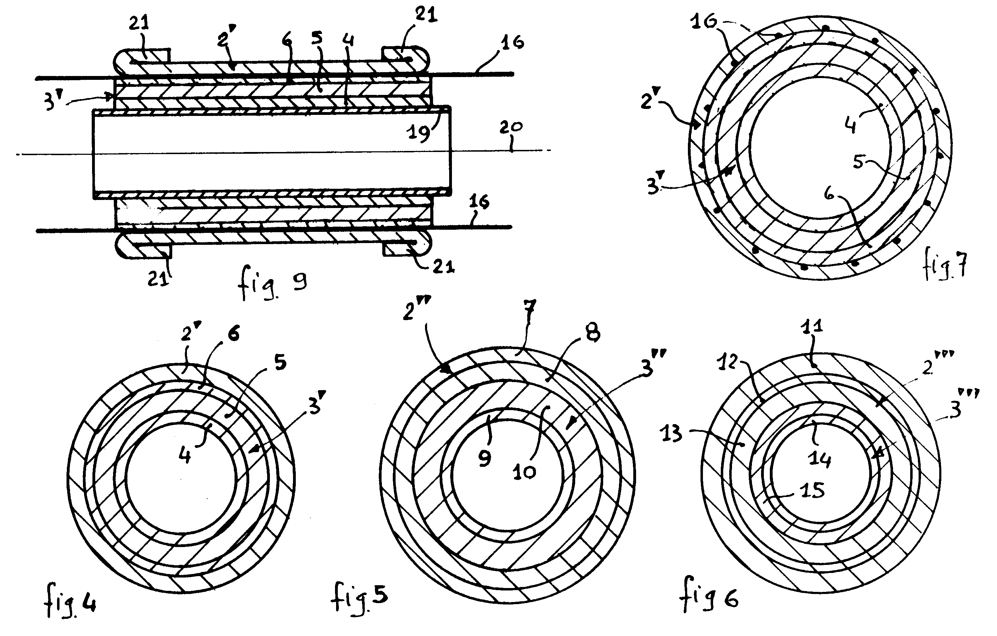

Figure 3 shows in perspective view an element according to the invention of a device for realizing cable joints.

As shown in figure 3 the element comprises a tubular support, for instance a length of a rigid tube 18 of polymeric material, for example polyvinyl chloride.

The length of the rigid tube 18 has a thickness of 2.5 mm and the diameter of its own inner cavity is of 45 mm and it makes possible the realization of joints in cables having a diameter comprised between 20 and 40 mm.

The covering 1 according to the invention shown in the figures 1, 2A and 2B and previously described with reference to said figures is fitted on the length of the rigid tube 18.

Figure 9 represents an alternative embodiment according to the invention of an element of a device for realizing cable joints.

As shown in said figure 9 the represented element comprises a length of the rigid tube 19 on which a covering according to the invention is fitted. The cross-section of the covering according to the invention is perpendicular to the longitudinal axis 20 of the element and is that of the embodiment shown in figure 7 and therefore comprises a second sleeve 2′ formed by a single tubular layer and a first sleeve 3′ formed by three coaxial and superimposed tubular layers 4, 5 and 6 whose characteristics have been previously indicated when the nature and the characteristics of the single layers marked with the reference numerals in question have been described.

As shown in figure 9 the second sleeve 2′ has, unlike that of figure 7, the end portions 21 turned up on its own outer surface and the length of said turned up portions is equal to 40% of the length of the first sleeve 3′.

This solution is particularly advantageous since the covering for joints comprises also the presence of the element realizing the outer protection of the joint.

In fact the second sleeve being longer than the first sleeve, extends outside the ends of this latter as far as to embrace the outer sheats of the cables effectuating in said zone the tightness against the entrance of outer agents.

Moreover, a plurality of copper wires 16 or like conductive material is interposed between the two sleeves so that said wires are, for instance but not necessarily, parallel to the generatrices of the sleeves themselves and the ends of said wires 16 project from both the ends of the covering.

Further alternative embodiments of an element according to the invention of a device for realizing cable joints not shown with the figures are those wherein a covering for cable joints according to the invention is fitted in elastically expanded conditions on a tubular support to which the only requisite required is that of maintaining the covering thereon for a period of time untill two years in radially elastically expanded conditions without this latter suffering damages.

The present invention includes also joints between cables comprising coverings according to the invention realized with the elements of devices for effectuating cable joints according to the invention.

Figure 10 shows a cable joint according to the invention and in particular a joint between cables realized with the covering of figure 7 and the element of figure 9.

As shown in figure 10 the joint connects to each other two cables 22 having the following structure.

Moving from inside outwards of each cable there is a conductor 23, for example formed by a plurality of copper wires having a section of 150 mm².

Around the conductor 23 there is an inner semiconductive layer 24, known per se, having a thickness of 1.5 mm surrounded by a layer 25 having a thickness of 5.5 mm of an insulating material compound of conventional type for extruded insulation cables and consequently not indicated.

On the layer 25 there is an outer semiconductive layer 26 having a thickness of 1.5 mm of conventional type too and around this latter there is a sheath 27 of polymeric material, for instance polyvinyl chloride having a thickness of 2 mm.

Moreover a screen of metallic wires 28 is interposed between the outer semiconductive layer 26 and the sheath 27 of the cables.

In the joint the end of each cable 22 is shaped by baring gradually for a length the conductor 23, the insulation 25, the outer semiconductive layer 26 and the metallic screen 28.

Moreover the conductors 23 of the two cables are arranged head to head and connected to each other for example by a clamp or a soldering 29.

Around the zone of mechanical and electrical connection 29 of the two conductors 23 there is, according to the known technique, a filler 30 known per se, whose outer surface is aligned with the outer surfaces of the insulations 25 of the cables.

Symmetrically arranged around the mechanical and electrical connection zone of the cable conductors 23 there is a joint covering, in particular that present in figure 9 which has been previously described.

As visible in figure 10, the ends 21 of the second sleeve 2′ extend as far as to superimpose the end portions of the sheaths 27 of the cables.

Moreover the plurality of conductive elements 16 consisting of copper wires interposed between the first and the second sleeve and projecting with respect to the ends of the second tubular body are for instance fastened by means of metal clamps 36 to the cable semiconductive layer and to the metallic screen 28 of this latter so as to realize in the joint the continuity of the metallic screen between the cables in the joint zone.

On effectuating the joint of figure 10, carried out by means of the element of figure 9, the fitting of the covering on the connection zone of the cable conductors, takes place while both the ends 21 of the second sleeve are turned up on the radially outermost surface of the same as shown with a dashed line in said figure 10.

It follows that during the removal of the rigid tubular support from the covering, the elastic contraction force exerted by the second sleeve on the ends of the first sleeve is greater than that which would be exerted without the turn-up.

This represents an advantage with respect to the other possible embodiments for the following reasons.

Just at the turn-up zone, the pressure that the second sleeve exerts on the ends of the first sleeve is greater and this means a higher speed of elastic contraction of the covering on its ends, with respect to the situation in which said turn-up is not present.

Said higher speed of elastic contraction of the covering at its ends ensures a greater reliability of maintaining it centered on the connection zone of the conductors during the removal of the tubular support.

In fact, during the removal of the tubular support from the covering the first part of this latter, which goes into contact with the cables, is the end opposite to that from which the tubular support is moved away and a high speed of elastic contraction of said end, ensuring an immediate and prompt clamping of the covering on the cables, avoids any danger, also minimum shiftings of said covering.

Alternative embodiments of joints according to the invention are all those in which there is any whatsoever covering according to the invention, for instance those described with reference to the figures 4, 5, 6, 7 and 8 and to the previously indicated alternative embodiments of the said coverings.

From the description of the previously disclosed different embodiments and from the following considerations, it is understood how the aimed purposes are reached by means of the present invention.

The characteristic of a covering according to the invention of being constituted by two elastically expansible and collapsible superimposed sleeves having the previously explained characteristics, of which the radially outermost one is fitted on the radially innermost one so as to encircle it radially, increases considerably the possibility of expansion of the covering with respect to the solution proposed by the Applicant with the Italian patent application N^{o} 19 102 A/89 without the arising of drawbacks.

In the solution according to the present invention, even if it is preferably that the outer sleeve has a residual deformation due to an imposed and applied in time elongation smaller than that of the radially innermost sleeve, this is not strictly necessary being sufficient that the outer sleeve has a residual deformation smaller than 35 % for an imposed elongation of 50 % determined by the Standard UNI 7321-74 on a flat test piece at 100 °C for a period of time of 500 hours.

This because even if a certain permanent deformation can arise in the ambit of the radial expansion to which the second sleeve (the radially outermost one) of the covering is subjected, the encircling action always exerted by the outermost sleeve on the innermost sleeve is able to compensate any permanent deformation occurring in this latter.

## Claims

1. Covering for cable joints comprising at least a first (3, 3′, 3˝, 3‴) and a second sleeve (2, 2′, 2˝, 2‴), both sleeves being elastically expansible in radial direction, coaxial, superimposed and independent of each other and formed by cross-linked polymeric material compounds, the first sleeve (3, 3′ 3˝ 3‴), radially inside the second sleeve (2, 2′, 2˝, 2‴) being at least for a part of its thickness constituted by an electrically insulating cross-linked polymeric compound, said covering being characterized by the fact that the second sleeve (2, 2′, 2˝, 2‴) when separated from the first sleeve ( 3, 3′, 3˝, 3‴) and in absence of any mechanical stress applied thereto, has the diameter of its own cavity smaller than the outer diameter of the first sleeve (3, 3′, 3˝, 3‴) when separated from the second sleeve (2, 2′, 2˝, 2‴) and in absence of any applied mechanical stress too.

2. Covering according to claim 1, characterized by the fact that the ratio between the outer diameter D₃ of the first sleeve (3, 3′, 3˝, 3‴) when separated from the second sleeve (2, 2′, 2˝, 2‴) and in absence of any mechanical stress applied thereto, and the inner diameter D₂ of the second sleeve (2, 2′, 2˝, 2‴), when separated from the first sleeve and in absence of any mechanical stress applied thereto is not lower than 1.2.

3. Covering according to claim 1, characterized by the fact that the second sleeve (2, 2′, 2˝, 2‴) is at least partially constituted by a compound having a residual deformation smaller than 35% for an imposed elongation of 50% applied for a period of time of 500 hours and at a temperature of 100°C.

4. Covering according to any one of the claims 1 and 2, characterized by the fact that the first sleeve (3, 3′, 3˝, 3‴) comprises two tubular layers, the radially innermost tubular layer being constituted by a cross-linked polymeric material compound having a dielectric constant ε not lower than 6 to which a tubular layer of an electrically insulating cross-linked polymeric material is superimposed and that the second sleeve (2, 2′, 2˝, 2‴) comprises two tubular layers of which the radially outermost one is made up of the cross-linked polymeric material compound having a residual deformation smaller than 35% for an imposed elongation of 50% applied for a period of time of 500 hours and at a temperature of 100°C and the tubular layer, lying below said radially outermost layer, is constituted by a semiconductive compound of a cross-linked polymeric material.

5. Covering according to any one of the claims from 1 to 3, characterized by the fact that the first sleeve (3, 3′, 3˝, 3‴) is formed by three tubular layers, said layers being coaxial and superimposed one upon the other, the radially innermost one being constituted by a cross-linked polymeric material compound having a dielectric constant ε not lower than 6, the intermediate one being constituted by an electrically insulating cross-linked polymeric material compound, the radially outermost one being constituted by a semiconductive compound of a cross-linked polymeric material and that the second sleeve (2, 2′, 2˝, 2‴) is entirely constituted by a cross-linked polymeric material compound to which no electric and/or dielectric characteristic is required, but a residual deformation smaller than 35% for an imposed elongation of 50% applied for a period of time of 500 hours and at a temperature of 100°C.

6. Covering according to claim 5, characterized by the fact that at least an electrically conductive metallic element (16) is interposed between the first (3, 3′, 3˝, 3‴) and the second sleeve (2, 2′, 2˝, 2‴), said electrically conductive metallic element projecting from both the ends of said sleeves.

7. Covering according to claim 6, characterized by the fact that the electrically conductive metallic element (16) is constituted by a plurality of circumferentially spaced conductors, independent of one another, selected from copper and/or aluminium wires, plaits of copper and/or aluminium wires and a braiding of copper and/or aluminium wires.

8. Covering according to claim 5, characterized by the fact that in axial direction the second sleeve (2, 2′, 2˝, 2‴) has both its own end portions projecting from the ends of the first sleeve (3, 3˝ 3˝, 3‴).

9. Covering according to claim 8, characterized by the fact that the end portions of the second sleeve (2, 2′, 2˝, 2‴) projecting from the ends of the first sleeve (3, 3′, 3˝, 3‴) are turned-up on the radially outermost surface of the second sleeve (2, 2′, 2˝, 2‴).

10. Covering according to claims 8 and 9, characterized by the fact that the length of the end portions of the second sleeve (2, 2′, 2˝, 2‴) projecting from the first sleeve (3, 3′, 3˝, 3‴) or turned-up on the radially outermost surface of the second sleeve (2, 2′, 2˝, 2‴) is not shorter than 10% of the length of the first sleeve (3, 3′, 3˝, 3‴).

11. Covering according to any one of the claims 1 and 2, characterized by the fact that the first sleeve 3, 3′, 3˝, 3‴) comprises two coaxial and superimposed tubular layers, the radially innermost tubular layer being constituted by a cross-linked polymeric material compound having a dielectric constant not lower than 6 to which a tubular layer of an electrically insulating cross-linked polymeric material is superimposed and that the second sleeve (2, 2′, 2˝, 2‴) comprises three coaxial and superimposed tubular layers of which the radially outermost one is formed by the cross-linked polymeric material compound having a residual deformation smaller than 35% for an imposed elongation of 50% and applied for a period of time of 500 hours and at a temperature of 100 °C, the intermediate tubular layer is constituted by a semiconductive cross-linked polymeric material compound and the radially innermost tubular layer is constituted by an electrically insulating cross-linked polymeric material compound.

12. Covering according to any one of the preceding claims, characterized by the fact that the cross-linked polymeric material compound of the second sleeve (2, 2', 2'', 2''') have a percentage ultimate elongation not lower than 300 %, while the cross-linked polymeric material compounds of the first sleeve (3, 3', 3'', 3''') have a percentage ultimate elongation not lower than 150 % .

13. Covering according to the preceding claims, characterized by the fact that the modulus E of the cross-linked compounds of the second sleeve (2, 2', 2'', 2''') is not lower than 0,2 MPa, while the modulus E of the compounds constituting the first sleeve (3, 3', 3'', 3''') is comprised between 0,2 MPa and 20 MPa.

14. Joint for electric cables comprising an electrical and mechanical connection between the conductors of two cables and a covering for said connection comprising at least a first (3, 3', 3'', 3''') and a second (2, 2', 2'', 2''') sleeve, both sleeves being elastically expansible in radial direction, coaxial, superimposed and independent of each other and formed by cross-linked polymeric material compounds, the first sleeve (3, 3', 3'', 3''') radially inside the second sleeve (2, 2', 2'', 2''') being constituted at least for a part of its thickness by an electrically insulating cross-linked polymeric material compound, said joint being characterized by the fact that the second sleeve (2, 2', 2'', 2''') when separated from the first one (3, 3', 3'', 3''') and from the cables and in absence of any mechanical stress applied thereto has the diameter of its own cavity smaller than the outer diameter of the first sleeve (3, 3', 3'', 3''') when separated from the second sleeve (2, 2', 2'', 2''') and from the cables and in absence of any applied mechanical stress too.

15. Joint according to claim 14, characterized by the fact that the ratio between said outer diameter of the first sleeve (3, 3', 3'', 3''') when separated from the second sleeve (2, 2', 2'', 2''') and from the cable and in absence of any mechanical stress applied thereto and the inner diameter of the second sleeve (2, 2', 2'', 2''') when separated from the first sleeve (3, 3', 3'', 3''') and from the cable and in absence of any mechanical stress applied thereto is not lower than 1,2.

16. Joint according to claim 14, characterized by the fact that the second sleeve (2, 2', 2'', 2''') is at least partially constituted by a compound having a residual deformation smaller than 35 % for an imposed elengation of 50 % applied for a period of time of 500 hours and at a temperature of 100 °C.

17. Joint according to any one of the claims from 14 to 16, characterized by the fact that the first sleeve (3, 3', 3'', 3''') comprises two tubular layers, the radially innermost tubular layer being constituted by a compound of cross-linked polymeric material having a dielectric constant ε not lower than 6 to which a tubular layer of electrically insulating cross-linked polymeric material is superimposed and that the second sleeve (2, 2', 2'', 2''') comprises two tubular layers of which the radially outermost one is constituted by a cross-linked polymeric material compound having a residual deformation smaller than 35 % for an imposed elongation of 50 % applied for a period of time of 500 hours and at a temperature of 100 °C, the tubular layer laying below said radially outermost layer, is constituted by a semiconductive compound of cross-linked polymeric material.

18. Joint according to any one of the claims from 14 to 17, characterized by the fact that the first tubular body (3, 3', 3'', 3''') is formed by three tubular layers, said layers being coaxial and superimposed one upon the other, the radially innermost one being made up of a cross-linked polymeric material compound having a dielectric constant ε not lower than 6, the intermediate one being made up of an electric insulating cross-linked polymeric material compound, the radially outermost one being constituted by a semiconductive compound of cross-linked polymeric material and that the second sleeve (2, 2', 2'', 2''') is entirely formed by a cross-linked polymeric material compound to which no electric and/or dielectric characteristic is required, but having a residual deformation smaller than 35 % for an imposed elongation of 50 % applied for a period of time of 500 hours at a temperature of 100 °C.

19. Joint according to claim 18, characterized by the fact that at least an electrically conductive metallic element (16) is interposed between the first (3, 3', 3'', 3''') and the second (2, 2', 2'', 2''') sleeve, said electrically conductive metallic element being connected to the metal screen of the cables.

20. Joint according to claim 19, characterized by the fact that the electrically conductive metallic element (16) is constituted by a plurality of independent conductors selected from copper and/or aluminium wires, plaits of copper and or aluminium wires, a braiding of copper and/or aluminium wires.

21. Joint according to claim 18, characterized by the fact that in axial direction the second sleeve (2, 2', 2'', 2''') has both its end portions projecting from the ends of the first sleeve (3, 3', 3'', 3''') and superimposed upon the cable sheaths.

22. Joint according to any one of the claims 14 and 15, characterized by the fact that the first sleeve (3, 3', 3'', 3''') comprises two coaxial and superimposed tubular layers, the radially innermost tubular layer being constituted by a cross-linked polymeric material compound having a dielectric constant ε not lower than 6 to which a tubular layer of electrically insulating cross-linked polymeric material is superimposed and that the second sleeve comprises three coaxial and superimposed tubular layers of which the radially outermost one is made up of a cross-linked polymeric material compound having a residual deformation smaller than 35 % for an imposed elongation of 50 % applied for a period of time of 500 hours and at a temperature of 100 °C, the intermediate tubular layer is constituted by a semiconductive cross-linked polymeric material compound and the radially innermost tubular layer is constituted by an electrically insulating cross-linked polymeric material compound.

23. Joint according to any one of the claims from 14 to 22, characterized by the fact that the cross-linked polymeric material compounds of the second sleeve (2, 2', 2'', 2''') have a percentage ultimate elongation not lower than 300 %, while the cross-linked polymeric material compound of the first sleeve (3, 3', 3'', 3''') have a percentage ultimate elongation not lower than 250 % .

24. Joint according to claims 14 to 22, characterized by the fact that the modulus E of the cross-linked compounds of the second sleeve (2, 2', 2'', 2''') is not lower than 0,2 MPa, while the modulus E of the cross-linked compound of the first sleeve (3, 3', 3'', 3''') is comprised between 0,2 and 20 MPa.

## Patentansprüche

1. Abdeckung für Kabelverbindungen, die wenigstens eine erste Hülse (3, 3', 3'', 3''') und eine zweite Hülse (2, 2', 2'', 2''') aufweisen, wobei beide Hülsen in Radialrichtung elastisch aufweitbar, koaxial, übereinanderliegend und unabhängig voneinander angeordnet sind und von vernetzten Polymermischungen gebildet werden, und die radial innerhalb der zweiten Hülse (2, 2', 2'', 2''') angeordnete erste Hülse (3, 3', 3'', 3''') auf wenigstens einem Teil ihrer Dicke von einer elektrisch isolierenden vernetzten Polymermischung gebildet wird, dadurch **gekennzeichnet,** daß die zweite Hülse (2, 2', 2'', 2'''), wenn sie von der ersten Hülse (3, 3', 3'', 3''') getrennt ist, und wenn auf sie eine mechanische Beanspruchung ausgeübt wird, einen Durchmesser ihres eigenen Hohlraums hat, der kleiner ist als der Außendurchmesser der ersten Hülse (3, 3', 3'', 3'''), wenn diese von der zweiten Hülse (2, 2', 2'', 2''') getrennt ist, und wenn auf sie ebenfalls keine mechanische Beanspruchung ausgeübt wird.

2. Abdeckung nach Anspruch 1, dadurch **gekennzeichnet,** daß das Verhältnis zwischen dem Außendurchmesser (D₃) der ersten Hülse (3, 3', 3'', 3'''), wenn sie von der zweiten Hülse (2, 2', 2'', 2''') getrennt ist, und wenn keine mechanische Beanspruchung auf sie ausgeübt wird, und dem Innendurchmesser (D₂) der zweiten Hülse (2, 2', 2'', 2'''), wenn sie von der ersten Hülse getrennt ist, und wenn keine mechanische Beanspruchung auf sie ausgeübt wird, nicht kleiner als 1,2 ist.

3. Abdeckung nach Anspruch 1, dadurch **gekennzeichnet,** daß die zweite Hülse (2, 2', 2'', 2''') wenigstens teilweise von einer Mischung gebildet wird, die eine Restverformung hat, die kleiner als 35 % für eine angelegte Dehnung von 50 % ist, die über einen Zeitraum von 500 h und bei einer Temperatur von 100°C ausgeübt wird.

4. Abdeckung nach einem der Ansprüche 1 und 2, dadurch **gekennzeichnet,** daß die erste Hülse (3, 3', 3'', 3''') zwei rohrförmige Schichten aufweist, wobei die radial innerste rohrförmige Schicht von einer vernetzten Polymermischung gebildet wird, die eine Dielektrizitätskonstante ε hat, die nicht kleiner als 6 ist, und über die eine rohrförmige Schicht eines elektrisch isolierenden vernetzten Polymers gelegt wird, und daß die zweite Hülse (2, 2', 2'', 2''') zwei rohrförmige Schichten aufweist, von denen die radial äußerste aus der vernetzten Polymermischung hergestellt ist, die eine Restverformung hat, die kleiner als 35 % für eine angelegte Dehnung von 50 % ist, die während eines Zeitraumes von 500 h und bei einer Temperatur von 100°C ausgeübt wird, und die Rohrschicht, die unter der radial äußersten Schicht liegt, von einer Halbleitermischung eines vernetzten Polymers gebildet wird.

5. Abdeckung nach einem der Ansprüche 1 bis 3, dadurch **gekennzeichnet,** daß die erste Hülse (3, 3', 3'', 3''') von drei rohrförmigen Schichten gebildet wird, die koaxial und übereinander angeordnet sind, wobei die radial innerste Schicht von einer vernetzten Polymermischung gebildet wird, die eine Dielektrizitätskonstante ε hat, die nicht kleiner als 6 ist, die Zwischenschicht von einer elektrisch isolierenden vernetzten Polymermischung und die radial äußerste Schicht von einer Halbleitermischung eines vernetzten Polymers gebildet werden, und daß die zweite Hülse (2, 2', 2'', 2''') vollständig von einer vernetzten Polymermischung gebildet wird, für die keine elektrische und/oder dielektrische Eigenschaft gefordert wird, deren Restverformung jedoch kleiner als 35 % für eine angelegte Dehnung von 50 % ist, die über einen Zeitraum von 500 h und bei einer Temperatur von 100°C ausgeübt wird.

6. Abdeckung nach Anspruch 5, dadurch **gekennzeichnet,** daß wenigstens ein elektrisch leitendes metallisches Element (16) zwischen der ersten Hülse (3, 3', 3'', 3''') und der zweiten Hülse (2, 2', 2'', 2''') angeordnet ist, wobei das elektrisch leitende metallische Element von beiden Enden der Hülsen vorsteht.

7. Abdeckung nach Anspruch 5, dadurch **gekennzeichnet,** daß das elektrisch leitende metallische Element (16) von einer Vielzahl von in Umfangsrichtung im Abstand angeordneten Leitern gebildet wird, die unabhängig voneinander sind und aus Kupfer- und/oder Aluminiumdrähten, Geflechten aus Kupfer- und/oder Aluminiumdrähten und aus Litzen aus Kupfer- und/oder Aluminiumdrähten ausgewählt werden.

8. Abdeckung nach Anspruch 5, dadurch **gekennzeichnet,** daß die beiden Endabschnitte der zweiten Hülse (2, 2', 2'', 2''') in Axialrichtung aus den Enden der ersten Hülse (3, 3', 3'', 3''') vorstehen.

9. Abdeckung nach Anspruch 8, dadurch **gekennzeichnet,** daß die Endabschnitte der zweiten Hülse (2, 2', 2'', 2'''), die aus den Enden der ersten Hülse (3, 3', 3'', 3''') vorstehen, auf die radial äußerste Fläche der zweiten Hülse (2, 2', 2'', 2''') umgeschlagen sind.

10. Abdeckung nach Anspruch 8 und 9, dadurch **gekennzeichnet,** daß die Länge der Endabschnitte der zweiten Hülse (2, 2', 2'', 2'''), die aus der ersten Hülse (3, 3', 3'', 3''') vorstehen oder auf die radial äußerste Fläche der zweiten Hülse (2, 2', 2'', 2''') umgeschlagen sind, nicht kleiner ist als 10 % der Länge der ersten Hülse (3, 3', 3'', 3''').

11. Abdeckung nach einem der Ansprüche 1 und 2, dadurch **gekennzeichnet,** daß die erste Hülse (3, 3', 3'', 3''') zwei koaxiale und übereinanderliegende rohrförmige Schichten aufweist, wobei die radial innerste rohrförmige Schicht von einer vernetzten Polymermischung gebildet wird, die eine Dielektrizitätskonstante hat, die nicht kleiner als 6 ist, und über die radial innerste Schicht eine rohrförmige Schicht aus einem elektrisch isolierenden vernetzten Polymer gelegt wird, und daß die zweite Hülse (2, 2', 2'', 2''') drei koaxiale und übereinander gelegte rohrförmige Schichten aufweist, von denen die radial äußerste von der vernetzten Polymermischung gebildet wird, die eine Restverformung hat, die kleiner als 35 % für eine angelegte Dehnung von 50 % ist und über einen Zeitraum von 500 h und bei einer Temperatur von 100°C ausgeübt wird, wobei die dazwischenliegende rohrförmigen Schicht von einer vernetzten Halbleiterpolymermischung und die radial innerste rohrförmige Schicht von einer elektrisch isolierenden vernetzten Polymermischung gebildet werden.

12. Abdeckung nach einem der vorhergehenden Ansprüche, dadurch **gekennzeichnet,** daß die vernetzte Polymermischung der zweiten Hülse (2, 2', 2'', 2''') eine Prozentbruchdehnung hat, die nicht kleiner als 300 % ist, während die vernetzten Polymermischungen der ersten Hülse (3, 3', 3'', 3''') eine Prozentbruchdehnung haben, die nicht kleiner als 150 % ist.

13. Abdeckung nach den vorhergehenden Ansprüchen, dadurch **gekennzeichnet,** daß der E-Modul der vernetzten Mischungen der zweiten Hülse (2, 2', 2'', 2''') nicht kleiner als 0,2 MPa ist, während der E-Modul der Mischungen, die die erste Hülse (3, 3', 3'', 3''') bilden, zwischen 0,2 MPa und 20 MPa liegt.

14. Verbindung für elektrische Kabel, die einen elektrischen und einen mechanischen Anschluß zwischen den Leitern der beiden Kabel und eine Abdeckung für den Anschluß mit wenigstens einer ersten Hülse (3, 3', 3'', 3''') und einer zweiten Hülse (2, 2', 2'', 2''') aufweist, wobei beide Hülsen in Radialrichtung elastisch aufweitbar, koaxial, übereinander und unabhängig voneinander angeordnet sind und von vernetzten Polymermischungen gebildet werden und wobei die erste Hülse (3, 3', 3'', 3''') radial innerhalb der zweiten Hülse (2, 2', 2'', 2''') angeordnet ist und wenigstens auf einem Teil ihrer Dicke von einer elektrisch isolierenden vernetzten Polymermischung gebildet wird, dadurch **gekennzeichnet,** daß die zweite Hülse (2, 2', 2'', 2'''), wenn sie von der ersten Hülse (3, 3', 3'', 3''') und von den Kabeln getrennt ist, und wenn auf sie keine mechanische Beanspruchung ausgeübt wird, einen Hohlraum mit einem Durchmesser hat, der kleiner ist als der Außendurchmesser der ersten Hülse (3, 3', 3'', 3'''), wenn diese von der zweiten Hülse (2, 2', 2'', 2''') und von den Kabeln getrennt ist, und wenn ebenfalls keine mechanische Beanspruchung ausgeübt wird.

15. Verbindung nach Anspruch 14, dadurch **gekennzeichnet,** daß das Verhältnis zwischen dem Außendurchmesser der ersten Hülse (3, 3', 3'', 3'''), wenn sie von der zweiten Hülse (2, 2', 2'', 2''') und von dem Kabel getrennt ist, und wenn keine mechanische Beanspruchung auf sie ausgeübt wird, und dem Innendurchmesser der zweiten Hülse (2, 2', 2'', 2'''), wenn sie von der ersten Hülse (3, 3', 3'', 3''') und von dem Kabel getrennt ist, und wenn keine mechanische Beanspruchung auf sie ausgeübt wird, nicht kleiner als 1,2 ist.

16. Verbindung nach Anspruch 14, dadurch **gekennzeichnet,** daß die zweite Hülse (2, 2', 2'', 2''') wenigstens teilweise von einer Mischung gebildet wird, die eine Restverformung hat, die kleiner als 35 % für eine angelegte Dehnung von 50 % ist, die über einen Zeitraum von 500 h und bei einer Temperatur von 100°C ausgeübt wird.

17. Verbindung nach einem der Ansprüche 14 bis 16, dadurch **gekennzeichnet,** daß die erste Hülse (3, 3', 3'', 3''') zwei rohrförmige Schichten aufweist, von denen die radial innerste rohrförmige Schicht von einer Mischung aus vernetztem Polymer gebildet wird, das eine Dielektrizitätskonstante ε hat, die nicht kleiner als 6 ist, wobei über die innerste Schicht eine rohrförmige Schicht aus elektrisch isolierendem vernetztem Polymer gelegt ist, und daß die zweite Hülse (2, 2', 2'', 2''') zwei rohrförmige Schichten aufweist, von denen die radial äußerste von einer vernetzten Polymermischung gebildet wird, die eine Restverformung hat, die kleiner als 35 % für eine angelegte Dehnung von 50 % ist, die über einen Zeitraum von 500 h und bei einer Temperatur von 100°C ausgeübt wird, wobei die rohrförmige Schicht, die unter der radial äußersten Schicht liegt, von einer Halbleitermischung aus vernetztem Polymer gebildet wird.

18. Verbindung nach einem der Ansprüche 14 bis 17, dadurch **gekennzeichnet,** daß der erste rohrförmige Körper (3, 3', 3'', 3''') von drei rohrförmigen Schichten gebildet wird, wobei die Schichten koaxial und übereinanderliegend angeordnet sind, die radial innerste Schicht aus einer vernetzten Polymermischung hergestellt ist, die eine Dielektrizitätskonstante ε hat, die nicht kleiner als 6 ist, die Zwischenschicht aus einer elektrisch isolierenden vernetzten Polymermischung hergestellt ist, die radial äußerste Schicht von einer Halbleitermischung aus vernetztem Polymer gebildet wird, und daß die zweite Hülse (2, 2', 2'', 2''') vollständig von einer vernetzten Polymermischung gebildet wird, für die keine elektrische und/oder dielektrische Eigenschaft gefordert ist, die jedoch eine Restverformung hat, die kleiner als 35 % für eine angelegte Dehnung von 50 % ist, die über einen Zeitraum von 500 h bei einer Temperatur von 100°C ausgeübt wird.

19. Verbindung nach Anspruch 18, dadurch **gekennzeichnet,** daß wenigstens ein elektrisch leitendes metallisches Element (16) zwischen der ersten Hülse (3, 3', 3'', 3''') und der zweiten Hülse (2, 2', 2'', 2''') angeordnet ist, wobei das elektrisch leitende metallische Element mit der Metallabschirmung der Kabel verbunden ist.

20. Verbindung nach Anspruch 19, dadurch **gekennzeichnet,** daß das elektrisch leitende metallische Element (16) von einer Vielzahl von unabhängigen Leitern gebildet wird, die aus Kupfer- und/oder Aluminiumdrähten, aus Geflechten von Kupfer- und/oder Aluminiumdrähten oder aus Litzen aus Kupfer- und/oder Aluminiumdrähten ausgewählt werden.

21. Verbindung nach Anspruch 18, dadurch **gekennzeichnet,** daß die zweite Hülse (2, 2', 2'', 2''') mit ihren beiden Endabschnitten in Axialrichtung aus den Enden der ersten Hülse (3, 3', 3'', 3''') vorsteht und auf den Kabelumhüllungen angeordnet ist.

22. Verbindung nach einem der Ansprüche 14 und 15, dadurch **gekennzeichnet,** daß die erste Hülse (3, 3', 3'', 3''') zwei koaxiale und übereinandergelegte rohrförmige Schichten aufweist, wobei die radial innerste rohrförmige Schicht von einer vernetzten Polymermischung gebildet wird, die eine Dielektrizitätskonstante ε hat, die nicht kleiner als 6 ist, und wobei über die innerste Schicht eine rohrförmige Schicht aus einem elektrisch isolierenden vernetzten Polymer gelegt ist, und daß die zweite Hülse drei koaxiale und übereinandergelegte rohrförmige Schichten aufweist, von denen die radial äußerste aus einer vernetzten Polymermischung hergestellt ist, die eine Restverformung hat, die kleiner als 35 % für eine angelegte Dehnung von 50 % ist, die über einen Zeitraum von 500 h und bei einer Temperatur von 100°C ausgeübt wird, wobei die Zwischenschicht von einer vernetzten Halbleiterpolymermischung und die radial innerste rohrförmige Schicht von einer elektrisch isolierenden vernetzten Polymermischung gebildet werden.

23. Verbindung nach einem der Ansprüche 14 bis 22, dadurch **gekennzeichnet,** daß die vernetzten Polymermischungen der zweiten Hülse (2, 2', 2'', 2''') eine Prozentbruchdehnung haben, die nicht kleiner als 300 % ist, während die vernetzte Polymermischung der ersten Hülse (3, 3', 3'', 3''') eine Prozentbruchdehnung hat, die nicht kleiner als 250 % ist.

24. Verbindung nach den Ansprüchen 14 bis 22, dadurch **gekennzeichnet,** daß der E-Modul der vernetzten Mischungen der zweiten Hülse (2, 2', 2'', 2''') nicht kleiner als 0,2 MPa ist, während der E-Modul der vernetzten Mischung der ersten Hülse (3, 3', 3'', 3''') zwischen 0,2 und 20 MPa liegt.

## Revendications

1. Gaine de revêtement pour joints de câbles comprenant, au moins, un premier (3, 3', 3'', 3''') et un second manchon (2, 2', 2'', 2'''), ces deux manchons étant élastiquement expansibles dans la direction radiale, coaxiaux, superposés et indépendants l'un de l'autre et réalisés par des mélanges de matériaux polymères réticulés, le premier manchon (3, 3', 3'', 3'''), radialement à l'intérieur du second manchon (2, 2', 2'', 2''') étant constitué, au moins sur une partie de son épaisseur, par un mélange de polymère réticulé isolant électrique, ladite gaine de revêtement étant caractérisée en ce que lorsque le second manchon (2, 2', 2'', 2''') est séparé du premier manchon (3, 3', 3'', 3'''), et en l'absence de tout effort mmécanique qui lui serait appliqué, a le diamètre de sa propre cavité inférieur au diamètre extérieur du premier manchon (3, 3', 3'', 3''') lorsqu'il est séparé du second manchon (2, 2', 2'', 2''') et en l'absence également de l'application de tout effort mécanique.

2. Gaine de revêtement selon la revendication 1, caractérisée en ce que le rapport entre le diamètre extérieur D₃ du premier manchon (3, 3', 3'', 3'''), lorsqu'il est séparé du second manchon (2, 2', 2'', 2'''), et en l'absence de l'application de tout effort mécanique sur celui-ci, et le diamètre intérieur D₂ du second manchon (2, 2', 2'', 2'''), lorsqu'il est séparé du premier manchon, et en l'absence de tout effort mécanique qui lui serait appliqué, n'est pas inférieur à 1,2.

3. Gaine de revêtement selon la revendication 1, caractérisée en ce que le second manchon (2, 2', 2'', 2''') est, au moins en partie, constitué par un mélange possédant une déformation résiduelle inférieure à 35 % pour un allongement imposé de 50 %, appliqué pendant une période de temps de 500 heures et à une température de 100°C.

4. Gaine de revêtement selon l'une quelconque des revendications 1 et 2, caractérisée en ce que le premier manchon (3, 3', 3'', 3''') comprend deux couches tubulaires, la couche tubulaire radialement le plus à l'intérieur étant constituée par un mélange de matériau polymère réticulé ayant une constante diélectrique non inférieure à 6, sur laquelle est superposée une couche tubulaire d'un matériau polymère réticulé isolant électrique et que le second manchon (2, 2', 2'', 2''') comprend deux couches tubulaires, dont celle située radialement le plus à l'extérieur est constituée d'un mélange de matériau polymère réticulé possédant une déformation résiduelle inférieure à 35 % pour un allongement imposé de 50 % appliqué pendant une période de temps de 500 heures et à une température de 100°C, et la couche tubulaire située au dessous de ladite couche située radialement le plus à l'extérieur est constituée par un mélange semiconducteur de matériau polymère réticulé.

5. Gaine de revêtement selon l'une quelconque des revendications 1 à 3, caractérisée en ce que le premier manchon (3, 3', 3'', 3''') est constitué par trois couches tubulaires, lesdites couches étant coaxiales et superposées l'une sur l'autre, celle située radialement le plus à l'extérieur étant constituée par un mélange de matériau polymère réticulé possédant une constante diélectrique non inférieure à 6, la couche intermédiaire étant constituée par un mélange de matériau polymère réticulé isolant électrique, celle située radialement le plus à l'extérieur étant constituée par un mélange semi-conducteur de matériau polymère réticulé et que le second manchon (2, 2', 2'', 2''') est entièrement constitué par un mélange de matériau polymère réticulé ne nécessitant aucune caractéristique électrique et/ou diélectrique, mais possédant une déformation résiduelle inférieure à 35 % pour un allongement imposé de 50 %, appliqué pendant une période de temps de 500 heures et à une température de 100°C.

6. Gaine de revêtement selon la revendication 5, caractérisée en ce qu au moins un élément métallique conducteur électrique (16) est interposé entre le premier (3, 3', 3'', 3''') et le deuxième manchon (2, 2', 2'', 2'''), ledit élément métallique conducteur électrique étant en saillie à partir des deux extrémités desdits manchons.

7. Gaine de revêtement selon la revendication 5, caractérisée en ce que l'élément métallique conducteur électrique (16) est constitué par une pluralité de conducteurs espacés circonférentiellement, indépendamment les uns des autres, choisis parmi des fils de cuivre et/ou d'aluminium, un entrelacement de fils de cuivre et/ou d'aluminium et des tresses de fils de cuivre et/ou d'aluminium.

8. Gaine de revêtement selon la revendication 5, caractérisée en ce que, dans la direction axiale, les propres extrémités du second manchon (2, 2', 2'', 2''') sont dirigées en saillie par rapport aux extrémités du premier manchon (3, 3', 3'', 3''').

9. Gaine de revêtement selon la revendication 8, caractérisée en ce que les parties d'extrémité du second manchon (2, 2', 2'', 2'''), en saillie par rapport aux extrémités du premier manchon (3, 3', 3'', 3'''), sont rabattues vers le haut sur la surface extérieure radiale du second manchon (2, 2', 2'', 2''').

10. Gaine de revêtement selon les revendications 8 et 9, caractérisée en ce que la longueur des parties d'extrémité du second manchon (2, 2', 2'', 2''') en saillie par rapport au premier manchon (3, 3', 3'', 3''') ou rabattues sur la surface radialement le plus à l'extérieur du second manchon (2, 2', 2'', 2''') n'est pas inférieure à 10 % de la longueur du premier manchon (3, 3', 3'', 3''').

11. Gaine de revêtement selon l'une quelconque des revendications 1 et 2, caractérisée en ce que le premier manchon (3, 3', 3'', 3''') comprend deux couches tubulaires coaxiales superposées, la couche tubulaire radialement le plus à l'intérieur étant constituée par un mélange de matériau polymère réticulé ayant une constante diélectrique non inférieure à 6, sur laquelle est superposée une couche tubulaire de matériau polymère réticulé, isolant électrique, et que le second manchon (2, 2', 2'', 2''') comprend trois couches tubulaires coaxiales superposées, dont celle située radialement le plus à l'extérieur est formée par le mélange de matériau polymère réticulé ayant une déformation résiduelle inférieure à 35 % pour un allongement imposé de 50 % et appliqué pendant une période de temps de 500 heures et à une température de 100°C, la couche tubulaire intermédiaire est constituée par un mélange de matériau polymère réticulé semi-conducteur et la couche tubulaire radialement le plus à l'intérieur est constituée par un mélange de matériau polymère réticulé isolant électrique.

12. Gaine de revêtement selon l'une quelconque des précédentes revendications, caractérisée en ce que le mélange de matériau polymère réticulé du second manchon (2, 2', 2'', 2''') possède un pourcentage de résistance à la limite l'allongement non inférieur à 300 %, tandis que les mélanges de matériau polymère réticulé du premier manchon (3, 3', 3'', 3''') ont un pourcentage de résistance à la limite d'allongement non inférieur à 150 %.

13. Gaine de revêtement selon les précédentes revendications, caractérisée en ce que le module d'élasticité des mélanges réticulés du second manchon (2, 2', 2'', 2''') n'est pas inférieur à 0,2 MPa, tandis que le module d'élasticité des mélanges constituant le premier manchon (3, 3', 3'', 3''') est compris entre 0,2 MPa et 20 MPa.

14. Joint pour câbles électriques comprenant un raccordement électrique et mécanique entre les conducteurs de deux câbles et une gaine de revêtement dudit raccordement comprenant, au moins, un premier (3, 3', 3'', 3''') et un second manchon (2, 2', 2'', 2'''), les deux manchons étant élastiquement expansibles en direction radiale, coaxiaux, superposés et indépendants l'un de l'autre et formés par des mélanges de matériau polymère réticulé, le premier manchon (3, 3', 3'', 3'''), radialement à l'intérieur du second manchon (2, 2', 2'', 2''') étant constitué, au moins pour une partie de son épaisseur, par un mélange de matériau polymère réticulé, isolant électrique, ledit joint étant caractérisé en ce que lorsque le second manchon (2, 2', 2'', 2''') est séparé du premier (3, 3', 3'', 3''') et des câbles, et en l'absence de l'application de tout effort mécanique sur celui-ci, le diamètre de sa propre cavité est inférieur au diamètre extérieur du premier manchon (3, 3', 3'', 3''') lorsqu'il est séparé du second manchon (2, 2', 2'', 2''') et des câbles, et en l'absence également de l'application de tout effort mécanique.

15. Joint selon la revendication 14, caractérisé en ce que le rapport entre ledit diamètre extérieur du premier manchon (3, 3', 3'', 3'''), lorsqu'il est séparé du second manchon (2, 2', 2'', 2''') et du câble, et en l'absence de l'application de tout effort sur celui-ci et le diamètre intérieur du second manchon (2, 2', 2'', 2'''), lorsqu'il est séparé du premier manchon (3, 3', 3'', 3''') et du câble et en l'application de tout effort mécanique sur celui-ci, n'est pas inférieur à 1,2.

16. Joint selon la revendication 14, caractérisé en ce que le second manchon (2, 2', 2'', 2''') est, au moins en partie, constitué par un mélange ayant une déformation résiduelle inférieure à 35 % pour un allongement imposé de 50 %, appliqué pendant une période de temps de 500 heures et à une température de 100°C.

17. Joint selon l'une quelconque des revendications 14 à 16, caractérisé en ce que le premier manchon (3, 3', 3'', 3''') comprend deux couches tubulaires, la couche tubulaire radialement le plus à l'intérieur étant constituée par un mélange de matériau polymère réticulé ayant une constante électrique non inférieure à 6, sur laquelle une couche tubulaire de matériau polymère réticulé isolant électrique est superposée et que le second manchon (2, 2', 2'', 2''') comprend deux couches tubulaires, dont la couche radialement le plus à l'extérieur est constituée par un mélange de matériau polymère réticulé possédant une déformation résiduelle inférieure à 35 % pour un allongement imposé de 50 %, appliqué pendant une période de temps de 500 heures et à une température de 100°C, la couche tubulaire se trouvant au dessous de ladite couche radialement le plus à l'extérieur est constituée par un mélange semi-conducteur de matériau polymère réticulé.

18. Joint selon l'une quelconque des revendications 14 à 17, caractérisé en ce que le premier corps tubulaire (3, 3', 3'', 3''') est formé par trois couches tubulaires, lesdites couches étant coaxiales et superposées l'une sur l'autre, celle située radialement le plus à l'intérieur étant constituée par un mélange de matériau polymère réticulé ayant une constante diélectrique non inférieure à 6, l'intermédiaire étant constituée d'un mélange de matériau polymère réticulé isolant électrique celle située radialement le plus à l'extérieur étant constituée par un mélange semi-conducteur de matériau polymère réticulé et que le second manchon (2, 2', 2'', 2''') est formé entièrement d'un mélange de matériau polymère réticulé pour lequel aucune caractéristique électrique et/ou diélectrique n'est exigée, mais possédant une déformation résiduelle inférieure à 35 % pour un allongement imposé de 50 %, appliqqué pendant une période de temps de 500 heures à une température de 100°C.

19. Joint selon la revendication 18, caractérisé en ce qu'au moins un élément métallique conducteur électrique (16) est interposé entre le premier (3, 3', 3'', 3''') et le deuxième manchon (2, 2', 2'', 2'''), ledit élément métallique conducteur élkectrique étant relié au blindage métallique des câbles.

20. Joint selon la revendication 19, caractérisé en ce que l'élément métallique conducteur électrique 16 est constitué par une pluralité de conducteurs indépendants choisis à partir de fils de cuivre et/ou d'aluminium, de fils de cuivre et/iou d'aluminium entrelacés et d'une tresse de fils de cuivre et/ou d'aluminium.

21. Joint selon la revendication 18, caractérisé en ce que, dans la direction axiale, les deux extrémités du second manchon (2, 2', 2'', 2''') sont en saillie à partir des extrémités du premeir manchon (3, 3', 3'', 3''') et superposées aux gaines du câble.

22. Joint selon l'une quelconque des revendications 14 et 15, caractérisé en ce que le premier manchon (3, 3', 3'', 3''') comprend deux couches tubulaires coaxiales et superposées, la couche tubulaire radialement le plus à l'intérieur étant constituée par un mélange de matériau polymère réticulé ayant une constante diélectrique non inférieure à 6, sur laquelle est superposée une couche tubulaire de matériau polymère réticulé, isolant électrique, et que le second manchon comprend trois couches tubulaires coaxiales et superposées, la première située radialement le plus à l'extérieur étant constituée par un mélange de matériau polymère réticulé possédant une déformation résiduelle inférieure à 35 % pour un allongement imposé de 50 %, appliqué pendant une période de temps de 500 heures et à une température de 100°C, la couche tubulaire intermédiaire est constituée par un mélange de matériau polymère réticulé semi-conducteur et la couche tubulire radialement le plus à l'intérieur est constituée par un mélange de matériau polymère réticulé, isolant électrique.

23. Joint selon l'une quelcnque des revendications 14 à 22, caractérisé en ce que les mélanges de matériau polymère réticulé du second manchon (2, 2', 2'', 2''') ont un pourcentage d'allongement à la limite de rupture non inférieur à 300 %, tandis que le mélange de matériau polymère réticulé du premier manchon (3, 3', 3'', 3''') a un pourcentage d'allongement à la limite de rupture non inférieur à 250 %.

24. Joint selon les revendications 14 à 22, caractérisé en ce que le module d'élasticité des mélanges réticulés du second manchon (2, 2', 2'', 2''') n'est pas inférieur à 0,2 MPa tandis que le module d'élasticité du mélange réticulé du premier manchon (3, 3', 3'', 3''') est compris entre 0,2 et 20 MPa.
